# EUROPEAN PATENT SPECIFICATION

(11) **EP 1 847 178 B1**
(45) Date of publication and mention of the grant of the patent: **07.04.2010**
(21) Application number: 05709319.7
(22) Date of filing: 25.01.2005
(51) Int. Cl.: A22C 13/02, A22C 11/00

(54) **CUTTING DEVICE FOR STRINGED SAUSAGE MATERIAL**
SCHNEIDVORRICHTUNG FÜR ABGEBUNDENES WURSTMATERIAL
DISPOSITIF DE DECOUPE POUR UNE SAUCISSE EN CHAPELET

(43) Date of publication of application: 24.10.2007
(73) Proprietor: Takumigiken Co., Ltd., Wakayama-shi Wakayama 6408390 (JP)
(72) Inventor: Nishimoto, Yoshitaka, 6408135 (JP)
(74) Representative: White, Duncan Rohan
(86) International application number: PCT/JP2005/000918
(87) International publication number: WO 2006/080047

(56) References cited:
- DE-A1- 19 905 773
- JP-A- 2000 152 745
- JP-A- 2002 086 386
- JP-A- 2004 236 555

## Description

### 1. Field of the Invention

The invention relates to an apparatus for cutting off a chainlike sausage string suspended from a rod, at twisted connecting portions into a short string of interconnected sausages.

### 2. Description of the Related Art

The chainlike sausage string comprises a plurality of sausages such as wieners interconnected like a chain via twisted connecting portions provided at predetermined intervals in a casing (intestinal casing, etc.). Such a chainlike sausage string is obtained by stuffing a raw material (minced meat, etc.) into a casing through a meat filling machine and by twisting the same at predetermined intervals to be formed a long string of sausages. Thereafter, the chainlike sausage string is spirally wound around and suspended from a rod (for example, a stainless-steel pipe of approximately 14 to 15 mm diameter) and subjected to smoking (heat smoking) in a smoke chamber, and then the chainlike sausage string wound around and suspended from the rod is cut off at the predetermined twisted connecting portions into a short string of interconnected sausages by using a cutting device.

A conventional cutting apparatus for cutting off at predetermined twisted connecting portions of a chainlike sausage string, i.e. a long string of interconnected sausages, includes exemplary a support member supporting a rod on which a chainlike sausage string is spirally wound around and suspended from, a cutting device mounted on the support which can be moved in the axial direction of the rod, and rotary cutter blades arranged in the cutting device, wherein a chainlike sausage string being spirally wound around and suspended from the rod is cut at its predetermined twisted connecting portions loaded on the surface of the rod by moving the cutting device while bringing the respective edges of the rotary cutter blades into pressure contact with the surface of the rod.
Patent document 1: Laid Open Japanese Patent Publication (unexamined)
No. 2000-152745
However, the cutting device disclosed in the publication is provided to load the edge of the cutting blade against the twisted connecting portions of the chainlike sausage string on the outer surface of the rod to be cut off. Accordingly, the cutting blade must be strongly pressed against the surface of the rod and therefore, not only is the surface of the rod easily damaged by the blade, but also the edge of the cutting blade is directly pressed on the hard rod and is easily nicked. There was thus a danger that the nicked edge may be mixed in the sausage pieces.

In the above-described cutting device, as described above, since a cutting blade must be strongly pressed against the rod, the support that supports the rod must be increased in rigidity against the pressing force of the cutting blades. There was thus a drawback that the structure of the support is complicated.
DE-A-19905773 discloses mechanical separation of a string of sausages from its carrying rod. The first sausage in a string is held on a cord loop through which the carrying rod is passed. A mobile unit collects a number of rods, each carrying a number of strings. The rods are placed horizontally into rings on a conveyor band that moves them to a separation and cutting station. Grips on a conveyor band hoof the loops to move strings off the rods to a position between the conveyor bands so that the first sausage is held securely. A cutting station then cuts the loop.

The present invention has been made in view of the above-described problems, and an object thereof is to present an apparatus for cutting a chainlike sausage string which is hardly caused inconvenience that the edges of the cutting blades are nicked, and which realizes efficient and smooth cutting of the chainlike sausage string wound around and suspended from a rod.

JP-A-2002086386 discloses an apparatus for cutting a chainlike sausage string alternating sausages with twisted connecting portions in the connection, comprising at least one or more than one of cutting blades for cutting off at the predetermined twisted connecting portions of a chainlike sausage string spirally wound around and suspended from a rod, wherein either the cutting blades or the rod is moved in the longitudinal direction of the rod with respect to the other one while bringing edge surfaces of the cutting blades into loose contact with the surface of the rod, whereby twisted connecting portions of the chainlike sausage string that are suspended by the rod and fasten to the surface of the rod in each position are cut with the cutting blades.

Along with the operation for cutting the chainlike sausage string, the edge surfaces of the cutting blades move along the surface of the rod and the twisted connecting portions of the chainlike sausage string suspended from the rod are cut.

The invention is **characterised in that** the apparatus is arranged such that during an operation for cutting the twisted connecting portions of the chainlike sausage string, each of the cutting blade edges is arranged so as to tilt with respect to the longitudinal direction of the rod.

In the apparatus of the invention, during an operation of cutting the chainlike sausage string suspended from the rod, the edges of the cutting blades slide while tilting with respect to the twisted connecting portions, and the same operational advantage as in the case of so-called draw-cutting is obtained.

In an embodiment of the invention, during an operation for cutting twisted connecting portions of a chainlike sausage string, at least a pair of cutting blades is arranged at positions symmetrical to each other about a perpendicular line passing through the center of a cross section of the rod, and each of the cutting blade edges is tilted symmetrically with respect to the perpendicular line passing through the center of a cross section of the rod.

In the cutting device according to the above embodiment, the edges of both cutting blades arranged at positions symmetrical to each other about the perpendicular line passing through the center of the cross section of the rod are tilted at a predetermined angle with respect to the perpendicular line passing through the center of the cross section of the rod, so that during an operation for cutting the chainlike sausage string suspended from the rod, the edge surfaces of the cutting blades move along the left and right outer surfaces of the rod across the perpendicular line passing through the center of the cross section of the rod.

### Effects of the Invention

According to an embodiment, the twisted connecting portions of a chainlike sausage string suspended from a rod are cut with cutting blades moving to either the cutting blades or the rod in the longitudinal direction of the rod with respect to the other of these in a state that the edge surfaces of the cutting blades are substantially brought into contact with the surface of the rod, so that the cutting blades move along the surface of the rod and cut the twisted connecting portions of the chainlike sausage string suspended from the rod, and therefore, nicked edges of the cutting blades are reduced, the lives of the cutting blades are lengthened, and in addition, the surface of the rod is not damaged by the cutting blades, and strong pressing of the cutting blades against the rod as in the conventional technique is not necessary, so that the rigidity of the holder for holding the rod may be lower than conventionally, and accordingly, the structure of the holder can be simplified.

Furthermore, during an operation for cutting the twisted connecting portions of the chainlike sausage string , the edges of the cutting blades are arranged so as to be tilted with respect to the longitudinal direction of the rod, so that in addition to the effect of the first aspect of the present invention, during the operation for cutting the chainlike sausage string suspended from the rod, the edges of the cutting blades slide while tilting with respect to the sausage, and as in the case of draw-cutting, the sausage is smoothly cut and the cut surface thereof is excellent in appearance.

In an embodiment, during the operation for cutting the chainlike sausage string suspended from the rod, both cutting blades move along the left and right outer surfaces across a perpendicular line passing through the center of the cross section of the rod in a state that the edge surfaces of the cutting blades are always in contact with the outer surface of the rod, so that in addition to the effect of the first or second aspect of the present invention, the sausage can be more reliably cut with both cutting blades.

### Brief Description of the Drawings

Fig. 1 is a general front view of a cutting apparatus according to the present invention;
Fig. 2 is a general side view of the cutting apparatus according to the present invention;
Fig. 3 is an enlarged plan view of the main part of the cutting apparatus;
Fig. 4 is an enlarged sectional view of the main part of the cutting apparatus;
Fig. 5 is an explanatory view showing the relationship between the cutting blade and the rod; and
Fig. 6 is a general front view showing another embodiment of the cutting apparatus of the present invention.

### Description of the Preferred Embodiments

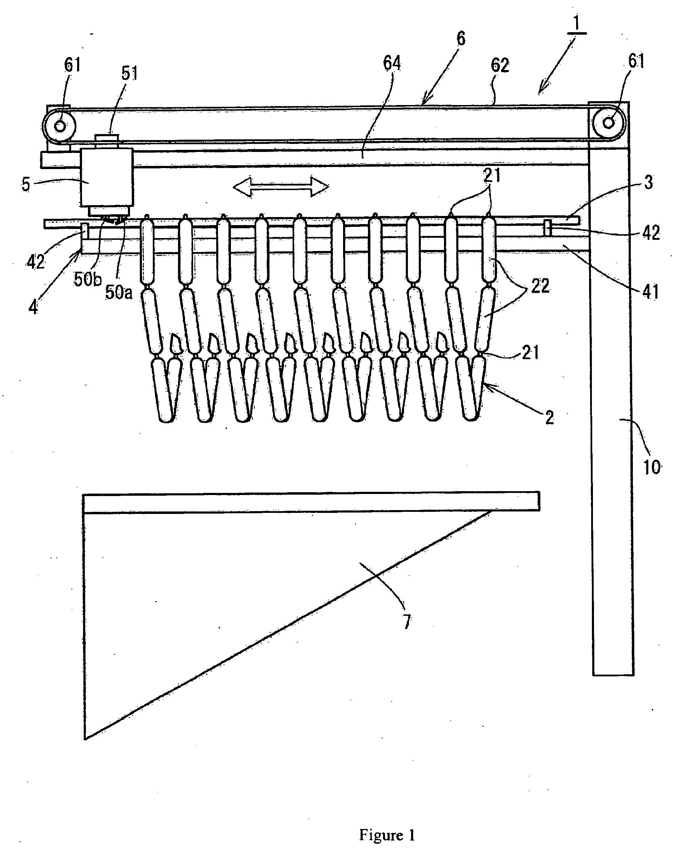

The apparatus for cutting a chainlike sausage string generally shown in Fig. 1 is used as, for example, a preprocessing apparatus of the cutting device (drum cutter) shown in Laid Open Japanese Publication (Unexamined) No. 2003-125698.

### Embodiment 1

This cutting device 1 basically includes a holder 4 for horizontally holding a rod 3 which a chainlike sausage string 2 is spirally wound around for forming a plural loops and suspended from, a cutting tool 5 provided with a pair of cutting blades 50a and 50b, a drive unit 6 for reciprocating the cutting tool 5 along the rod 3 in the longitudinal direction thereof, and a shooter 7 which receives cut chainlike sausage string s 3 and shoots these into the cutting device (drum cutter).

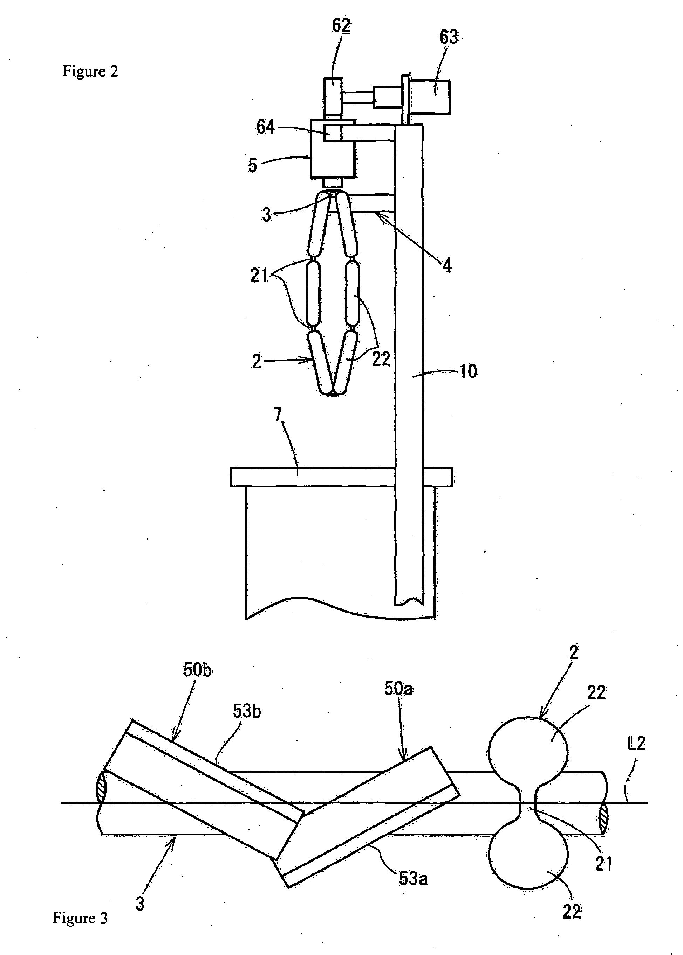

Besides, said chainlike sausage string 2 includes a plurality of sausages 22 connected like a chain via twisted connecting portions 21 provided at predetermined intervals in a casing (intestine casing, etc.). The chainlike sausage string 2 is spirally wound around by using a twisted connecting portion between the two sausages thereof and suspended from the rod 3 in a loop shape as shown in Fig. 1 and Fig. 2, and then smoked (heat-smoked) in a smoke chamber.

Said rod 3 is formed of a stainless-steel-made rod having a circular section of approximately 14 to 15 mm diameter.

Said holder 4 is provided in the vicinity of an upper portion of a machine body 10 and includes a frame 41 horizontally extending and mount parts 42 which are provided on both ends in the longitudinal direction of the frame 41 and the rod 3 is placed on.

The drive unit 6 includes a pair of guide rollers 61 each can be rotated provided on an upper end of the machine body 10, an endless belt 62 laid across the guide rollers 61, a drive motor 63 for turning the endless belt 62 between the guide rollers 61 by rotating one of the guide rollers 61, and a guide rail 64 horizontally extending which is provided below the endless belt 62 at an upper end of the machine body.

The cutting tool 5 is disposed to be able to slide on the guide rail 64 and fastened to the middle of the endless belt 62 via a bracket 51 so as to move along the guide rail 64 according to the turning of the endless belt 62.

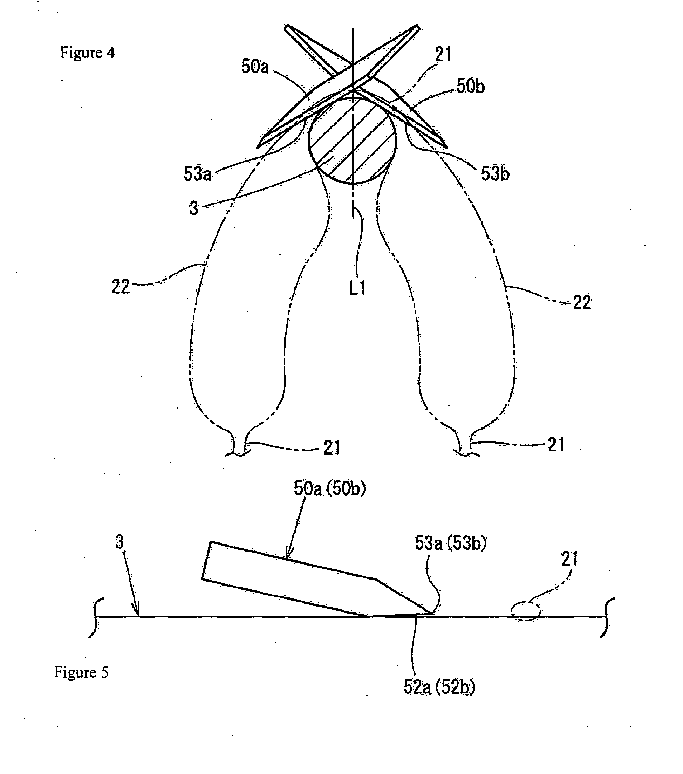

To the lower surface side of this cutting tool 5, a pair of cutting blades 50a and 50b are attached while being displaced from each other by a predetermined distance in the front and rear of the moving direction of the cutting tool 5, and as the cutting blades 5 attached to the cutting tool 5, double-edged blades that are used for an existing cutter knife are used, and as shown in Fig. 5, set on the cutting tool 5 so that one of the edge surfaces 52a and 52b of the respective cutting blades 50a and 50b comes into contact with the surface of the rod 3 during an operation for cutting the chainlike sausage string 2 at the twisted connecting portions.

Preferably, the cutting blades 50a and 50b are set so that during an operation for cutting the chainlike sausage string 2 at the twisted connecting portions, the blade base sides of the edge surfaces 52a and 52b come into contact with the surface of the rod 3 and the edges 53a and 53b slightly float from the surface of the rod 3, and by this setting, the edges 53a and 53b can be further prevented from being nicked.

In this embodiment, during an operation for cutting the twisted connecting portions 21 of the chainlike sausage string 2, both cutting blades 50a and 50b are arranged at positions symmetrical to each other about a perpendicular line L passing through the center of the cross section of the rod 3 and the edges 53a and 53b thereof are arranged so as to tilt at a predetermined angle (in the embodiment, approximately 60 degrees) symmetrically about the perpendicular line L1 passing through the center of the cross section of the rod 3, and furthermore, as shown in Fig. 3, the edges 53a and 53b of the cutting blades 50a and 50b are arranged so as to tilt at a predetermined angle (approximately 30 degrees in the embodiment) with respect to the longitudinal direction L2 of the rod 3, that is, the axial direction L2 of the rod 3.

Both the cutting blades 50a and 50b are attached to the cutting tool 5 via elastic urging means such as springs, and the cutting blades 50a and 50b are urged further downward than the lower surface of the cutting tool 5.

Next, by the above-described cutting device 1, a process of properly cutting and separating a smoked chainlike sausage string 2 at the twisted connecting portions 21 and throwing the separated chainlike sausage string 2 into the shooter 7 will be described.

First, both ends in the longitudinal direction of the rod 3 which a smoked chainlike sausage string 2 is wound around and suspended from are placed on the mount parts 42 of the holder 4.

Subsequently, by rotating forward the drive motor 63 for a predetermined time and then reversing the same by driving the drive unit 6, the cutting tool 5 is reciprocated by a predetermined stroke along the guide rail 64, and according to the reciprocation of the cutting tool 5, the cutting blades 50a and 50b move with respect to the rod 3 in the longitudinal direction thereof while the edge surfaces 52a and 52b are brought into contact with the surface of the rod 3, whereby the twisted connecting portions 21 of the chainlike sausage string 2 placed on the rod 3 are cut by the cutting blades 50a and 50b.

Thereby, in the embodiment, a pair of cutting blades 50a and 50b are provided in the front and rear of the moving direction of the cutting tool 5, so that when cutting the chainlike sausage string 2, even if cutting with the cutting blade 50a in the front side of the advancing direction is not possible, the cutting operation is performed again with the cutting blade 50b on the rear side in the advancing direction, so that cutting failures are reduced.

In the above-described cutting device, during an operation for cutting the chainlike sausage string 2, the edges 53a and 53b of the cutting blades 50a and 50b are not pressed against the surface of the rod 3 differently from the conventional cutting device, so that not only are the lives of the cutting blades 50a and 50b lengthened, but also the edges of the cutting blades 50a and 50b are hardly nicked, and the surface of the rod 3 is not damaged by the cutting blades 50a and 50b.

In the above-described cutting device, strong pressing of the cutting blades 50a and 50b against the rod 3 as in the conventional cutting device is not necessary, so that the rigidity of the holder 4 for holding the rod 3 may be lower than conventionally, so that the structure of the holder 4 can be simplified accordingly.

In the embodiment, during an operation for cutting the twisted connecting portions 21 of the chainlike sausage string 2, as shown in Fig. 4, both cutting blades 50a and 50b are arranged at positions symmetrical to each other about the perpendicular line L passing through the center of the cross section of the rod 3, and the edges 53a and 53b are tilted at a predetermined angle symmetrically about the perpendicular line L1 passing through the center of the cross section of the rod 3, so that both cutting blades 50a and 50b move along left and right outer surfaces of the rod 3 across the perpendicular line L1 passing through the center of the cross section of the rod 3, and during an operation for cutting the twisted connecting portions 21 of the chainlike sausage string 2, the edge surfaces 52a and 52b of the cutting blades 50a and 50b that move along the rod 3 are always in contact with the outer surface of the rod 3, whereby the twisted connecting portions 21 are reliably cut with the cutting blades 50a and 50b.

Furthermore, in the above-described cutting device, the edges 53a and 53b of the cutting blades 50a and 50b are arranged so as to tilt at a predetermined angle with respect to the longitudinal direction of the rod 3, that is, the axial direction L2 of the rod 3, so that during an operation for cutting the twisted connecting portions 21, the edges 53a and 53b of the cutting blades 50a and 50b slide while tilting with respect to the twisted connecting portions 21, whereby the same operational advantage as in the draw-cutting is obtained, the cutting of the twisted connecting portions 21 is smoothened, and the cut surface also becomes satisfactory.

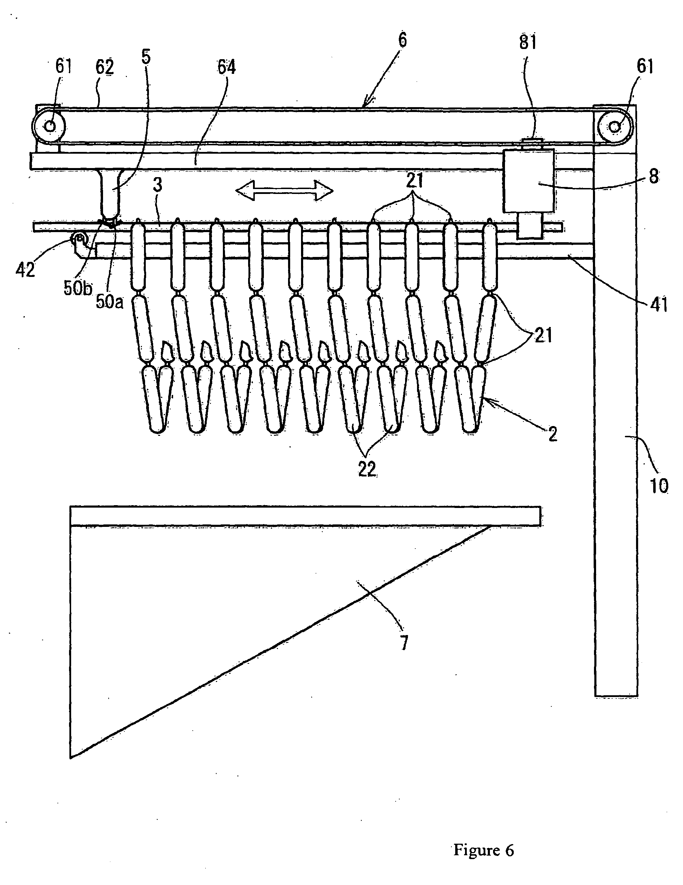

In the above-described embodiment, the cutting blades 50a and 50b are moved with respect to the rod 3, however, without limiting to this, it is also possible that the rod 3 is moved with respect to the cutting blades 50a and 50b as shown in Fig. 6.

### Embodiment 2

That is, in the cutting device 1 shown in Fig. 6, the cutting tool 5 provided with a pair of cutting blades 50a and 50b is fixed to the top end of a cantilever type of the guide rail 64, and a free rotary guide roller is attached to the top end of a cantilever type of flame 41, on which the rod 3 is supported to be reciprocally moved by a mobile (actuator) 8.

On the other hand, the mobile 8 is movably provided on the guide rail 64 and fastened to the middle of the endless belt 62 via a bracket 81 so as to move along the guide rail 64 according to turning of the endless belt 62.

Then, one end in the longitudinal direction of the rod 3 is placed on the rotor 42, and after fastening the other end in the longitudinal direction of the rod 3 to the mobile 8, the rod 3 is moved with respect to the cutting blades 50a and 50b according to turning of the endless belt 62.

In the above-described embodiment, double-edged blades are used as the cutting blades 50a and 50b, however, without limiting to this, one-edged blades may be used, instead.

## Claims

1. Apparatus for cutting a chainlike sausage string alternating sausages with twisted connecting portions (21) in the connection, comprising at least one or more than one of cutting blades (50a, 50b) for cutting off at the predetermined twisted connecting portions (21) of a chainlike sausage string (2) spirally wound around and suspended from a rod (3), wherein either the cutting blades (50a, 50b) or the rod (3) is moved in the longitudinal direction of the rod (3) with respect to the other one while bringing edge surfaces (52a, 52b) of the cutting blades (50a, 50b) into loose contact with the surface of the rod (3), whereby twisted connecting portions (21) of the chainlike sausage string (2) that are suspended by the rod (3) and fasten to the surface of the rod (3) in each position are cut with the cutting blades (50a, 50b);
**characterised in that** the apparatus is arranged such that during an operation for cutting the twisted connecting portions (21) of the chainlike sausage string (2), each of the cutting blade edges (53a, 53b) is arranged so as to tilt with respect to the longitudinal direction of the rod (3).

2. The apparatus for cutting a chainlike sausage string according to claim 1, wherein during an operation for cutting twisted connecting portions (21) of a chainlike sausage string, at least a pair of cutting blades (50a, 50b) is arranged at positions symmetrical to each other about a perpendicular line passing through the center of a cross section of the rod (3), and each of the cutting blade edges (53a, 53b) is tilted symmetrically with respect to the perpendicular line passing through the center of a cross section of the rod (3).

## Patentansprüche

1. Vorrichtung zum Schneiden einer kettenförmigen Wurstschnur, die Würste mit gedrehten Verbindungsabschnitten (21) in der Verbindung alterniert, umfassen mindestens eine oder mehr als eine Schneidklinge (50a, 50b) zum Abschneiden an den vorbestimmten gedrehten Verbindungsabschnitten (21) einer kettenförmigen Wurstschnur (2), die spiralartig um eine Stange (3) gedreht sind und an dieser aufgehängt sind, wobei entweder die Schneidklingen (50a, 50b) oder die Stange (3) in Längsrichtung der Stange (3) in Bezug auf die andere bewegt wird, während die Randflächen (52a, 52b) der Schneidklingen (50a, 50b) in lockeren Kontakt mit der Oberfläche der Stange (3) gebracht werden, wodurch die gedrehten Verbindungsabschnitte (21) der kettenförmigen Wurstschnur (2), die an der Stange (3) aufgehängt sind und an der Oberfläche der Stange (3) in jeder Position befestigt sind, mit den Schneidklingen (50a, 50b) geschnitten werden;
**dadurch gekennzeichnet, dass** die Vorrichtung so angeordnet ist, dass während eines Schneidvorgangs an den gedrehten Verbindungsabschnitten (21) der kettenförmigen Wurstschnur (2), jeder der Ränder der Schneidklingen (53a, 53b) so angeordnet ist, dass er sich in Bezug auf die Längsrichtung der Stange (3) neigt.

2. Vorrichtung zum Schneiden einer kettenförmigen Wurstschnur nach Anspruch 1, wobei, während eines Schneidvorganges an den gedrehten Verbindungsabschnitten (21) einer kettenförmigen Wurstschnur, mindestens ein Paar Schneidklinge (50a, 50b) an Positionen angeordnet sind, die an einer senkrechten Linie, die durch die Mitte eines Querschnitts der Stange (3) verläuft, symmetrisch zueinander sind, und jeder der Ränder der Schneidklingen (53a, 53b) sich in Bezug auf die senkrechte Linie, die durch die Mitte eines Querschnitts der Stange (3) verläuft, symmetrisch neigt.

## Revendications

1. Appareil destiné à couper un cordon de saucisse en forme de chaîne alternant des saucisses avec des parties de liaison vrillées (21) dans la liaison, comprenant au moins une ou plus d'une lame tranchante (50a, 50b) destinée à couper au niveau des parties de liaison vrillées prédéterminées (21) d'un cordon de saucisse en forme de chaîne (2) enroulées en spirale autour d'une tige (3) et y étant suspendues, dans lequel soit les lames tranchantes (50a, 50b) soit la tige (3) sont déplacées dans le sens longitudinal de la tige (3) par rapport à l'autre tout en faisant rentrer en contact lâche les surfaces de bord (52a, 52b) des lames tranchantes (50a, 50b) avec la surface de la tige (3), par le biais duquel sont coupées à l'aide des lames tranchantes (50a, 50b) les parties de liaison vrillées (21) du cordon de saucisse en forme de chaîne (2) étant suspendues par la tige (3) et fixées à la surface de la tige (3) dans chaque position;
**caractérisé en ce que** l'appareil est agencé de sorte que, lors de l'opération destinée à couper les parties de liaison vrillées (21) du cordon de saucisse en forme de chaîne (2), chacun des bords de lame tranchante (53a, 53b) est agencé de façon à s'incliner par rapport au sens longitudinal de la tige (3).

2. Appareil destiné à couper un cordon de saucisse en forme de chaîne selon la revendication 1, dans lequel, lors d'une opération destinée à couper les parties de liaison vrillées (21) d'un cordon de saucisse en forme de chaîne, au moins une paire de lames tranchantes (50a, 50b) est agencée à des positions symétriques l'une par rapport à l'autre au niveau d'une ligne perpendiculaire passant à travers le centre d'une section transversale de la tige (3), et chacun des bords de lame tranchante (53a, 53b) est incliné de manière symétrique par rapport à la ligne perpendiculaire passant à travers le centre d'une section transversale de la tige (3).
